# EUROPÄISCHE PATENTSCHRIFT

(11) **EP 3 619 083 B1**
(45) Veröffentlichungstag und Bekanntmachung des Hinweises auf die Patenterteilung: **21.05.2025**
(21) Anmeldenummer: 18720761.8
(22) Anmeldetag: 17.04.2018
(51) Int. Cl.: B60T 17/22

(54) **VORRICHTUNG ZUM ERFASSEN UND MESSEN VON BREMSSTAUB**
DEVICE FOR DETERMINE AND MEASURING BRAKE DUST
DISPOSITIF POUR ENREGISTRER ET MESURER LA POUSSIÈRE DES FREINS

(30) Priorität: 02.05.2017 DE 102017109356
(43) Veröffentlichungstag der Anmeldung: 11.03.2020
(73) Patentinhaber: HORIBA Europe GmbH, 64293 Darmstadt (DE)
(72) Erfinder: LUGOVYY, Dmytro, 61279 Grävenwiesbach (DE); KURZE, Tobias, 64404 Bickenbach (DE); WANINGER, Robert, 85055 Ingolstadt (DE); GRAMSTAT, Sebastian, 86633 Neuburg (DE)
(74) Vertreter: Müller Hoffmann & Partner
(86) Internationale Anmeldenummer: PCT/EP2018/059801
(87) Internationale Veröffentlichungsnummer: WO 2018/202421

(56) Entgegenhaltungen:
- DE-A1- 10 329 961
- DE-A1- 102007 009 744
- DE-U1- 20 308 576
- DE-U1- 202005 006 844
- KLAUS AUGSBURG: "Sampling of Brake Dust Particles", 15 June 2016 (2016-06-15), Retrieved from the Internet <URL:http://2016.eurobrake.net/> [retrieved on 20201002]
- S. GRAMSTAT, A CSERHATI, M. SCHROEDER, DMYTRO LUGOVYY: "Brake Particle Emission Measurements - Testing Method and results", 28 March 2017 (2017-03-28), Retrieved from the Internet <URL:http://2016.eurobrake.net/> [retrieved on 20201002]
- H. SACHSE, K. AUGSBURG: "XXXIV Internationales [My]- Symposium Bremsen-Fachtagung : October 30th to 31st 2015, Bad Neuenahr, Germany", 31 October 2015, ISBN: 9783183794126
- CARSTEN TRAUTMANN: "Erstellen eines Messprozesses zur Partikelmessung von Bremsstaub", 2 October 2013, TECHNISCHE UNIVERSITÄT ILMENAU
- HAGINO HIROYUKI ET AL: "Laboratory testing of airborne brake wear particle emissions using a dynamometer system under urban city driving cycles", ATMOSPHERIC ENVIRONMENT, PERGAMON, GB, vol. 131, 12 February 2016 (2016-02-12), pages 269 - 278, XP029455940, ISSN: 1352-2310, DOI: 10.1016/J.ATMOSENV.2016.02.014

## Beschreibung

Die Erfindung betrifft eine Vorrichtung zum Erfassen und Messen von Bremsstaub sowie einen Bremsenprüfstand.

Die Umweltbelastung durch Fahrzeugbremsen, insbesondere von Kraftfahrzeug- oder LKW-Bremsen ist ein ernst zu nehmendes Thema. Durch den Bremsvorgang im Fahrzeug wird die Belagmasse der Bremsbeläge derart abgerieben, dass durch diesen Vorgang feinste Partikel losgelöst werden. Diese sind teilweise sogar lungengängig und leisten somit einen schädlichen Beitrag zur Feinstaubbelastung mit entsprechenden Risiken für gesundheitliche Beeinträchtigungen.

Aber auch losgelöst von den ernsten Fragen einer Gesundheitsbeeinträchtigung durch Bremsen-Feinstaub kann Bremsstaub auch zu einer starken Verschmutzung der Radfelgen führen, was zumindest ästhetische Nachteile nach sich zieht und den optischen Gesamteindruck eines Fahrzeugs stören kann.

Es sind Messvorrichtungen bekannt, um die o.g. Bremsstaub-Partikel zu erfassen, zu quantifizieren und deren Größe zu bestimmen.

In den Veröffentlichungen
Klaus Augsburg: "Sampling of Brake Dust Particles", 15. Juni 2016 (2016-06-15), URL:http://2016.eurobrake.net/, [gefunden am 2020-10-02];
S. Gramstat, A Cserhati, M. Schroeder, Dmytro Lugovyy: "Brake Particle Emission Measurements - Testing Method and results", 28. März 2017 (2017-03-28), URL:http://2016.eurobrake.net/, [gefunden am 2020-10-02];
H. Sachse, K. Augsburg: "XXXIV Internationales [My]- Symposium Bremsen-Fachtagung : October 30th to 31st 2015, Bad Neuenahr, Germany", 31. Oktober 2015 (2015-10-31)ISBN: 9783183794126;
Carsten Trautmann: "Erstellen eines Messprozesses zur Partikelmessung von Bremsstaub", 2. Oktober 2013 (2013-10-02), Technische Universität Ilmenau;
sind verschiedene Messvorrichtungen und Messverfahren zur Partikelmessung von Bremsstaub für die Bewertung bremseninduzierter Emissionen beschrieben. Zur Verbesserung der Qualität der Messergebnisse ist es anzustreben, dass möglichst viele bzw. alle Bremsstaub-Partikel erfasst werden können, die sich bei einem Bremsvorgang gelöst haben.

Der Erfindung liegt die Aufgabe zugrunde, eine verbesserte Vorrichtung zum Erfassen und Messen von Bremsstaub anzugeben.

Die Erfindung wird durch eine Vorrichtung mit den Merkmalen von Anspruch 1 gelöst. Vorteilhafte Weiterentwicklungen sind den abhängigen Ansprüchen zu entnehmen.

Es ist vorteilhaft, wenn die Vorrichtung schon frühzeitig im Rahmen der Auslegung der Bremsanlage eines Fahrzeuges zur Anwendung kommen kann.

Daher wird eine Messvorrichtung angegeben, welche in der üblichen, bekannten Prüf- und Entwicklungsumgebung für Bremssysteme Anwendung findet.

Die Messvorrichtung für die Erfassung des Bremsstaubs funktioniert im Zusammenhang mit einem dynamischen Bremsenprüfstand, bei dem die zu prüfende Bremse z.B. mit einem beispielsweise elektrischen Bremsaktuator betätigt wird. Die Messvorrichtung ist in diesem Fall ein Teil der Gesamtapplikation und kann somit als Teil des Bremsenprüfstands betrieben werden. Die Messung der Bremsstaub-Partikel kann in Echtzeit mit mehreren Messwerten pro Sekunde erfolgen.

Die dazu zweckmäßige Messprozedur umfasst ein automatisiertes Programm mit definierten Lastzyklen, mit welchen das Bremssystem im Bremsenprüfstand beaufschlagt wird. So können reproduzierbar in Verbindung mit den jeweils auf die Bremse wirkenden Lasten die Bremsstaubpartikel erfasst und gemessen werden.

Das Partikelverhalten einer Bremse kann somit auf einem Bremsenprüfstand gemessen werden. Bremsenprüfstände werden benutzt, um die realen Lastprofile eines Bremssystems zu simulieren. Diese Prüfstände stellen in der Regel eine stabile, reproduzierbare Messumgebung zur Bremsenprüfung zur Verfügung.

Zur Erfassung und Messung der Bremspartikel am Bremsenprüfstand ist es möglich, einen Messpunkt zu definieren. Der Messpunkt kann sich im Abluftkanal einer Gebläseanlage befinden, die zur Kühlung der Bremse im Prüfbetrieb einen Kühlluftstrom erzeugt. Die Bremsstaub-Partikel werden dann durch den Luftstrom über den Abluftkanal der Gebläseanlage zur eigentlichen Messstelle transportiert. Diese Messstelle befindet sich an einer definierten Stelle im Abluftkanal. Dort werden die Partikel vom Messsystem aufgenommen, z.B. über einen Schlauch, einen beheizten Schlauch oder einen beheizten Schlauch mit Kaltluft und zum Partikelmessgerät geführt.

Das Partikelmessgerät ist in der Lage, die Partikel zu zählen und deren Größe bzw. Größenverteilung zu bestimmen. Bei dem Gerät kann es sich um ein an sich bekanntes Gerät zum Messen von kleinen bzw. feinsten Partikeln handeln, z.B. um ein Gerät, das bei der Abgasanalyse eingesetzt wird, z.B. zum Messen von Partikeln in Dieselabgasen. Derartige Geräte sind bekannt und werden daher an dieser Stelle nicht weiter vertieft.

Das Partikelmessgerät kann mit dem Bremsenprüfstand kommunizieren, so dass die Messungen synchronisiert zur Bremsenprüfung mit Lastprofilen ablaufen. Auf diese Weise können die Messergebnisse des Partikelmessgeräts auch immer den jeweiligen Belastungen der Bremse im Bremsenprüfstand zugeordnet werden.

Durch den Transport der Bremsemissionen, insbesondere der Bremspartikel, mit dem Kühlluftstrom des Abluftkanals werden diese verdünnt wobei zeitgleich eine homogene Mischung entsteht. Der Abluftkanal erfüllt die damit auch die Funktion eines Verdünnungskanals bzw. -tunnels. Dadurch wird die Bildung von Verklumpungen oder Konglomeraten der Bremsstaub-Partikel verhindert, die das Messergebnis verfälschen würden bzw. die Reproduzierbarkeit der Messung deutlich verschlechtern würden.

Die Messgenauigkeit kann durch den eine Verdünnungswirkung erzielenden Abluftkanal somit erheblich verbessert werden. Der Abluftkanal ist demnach derart auszugestalten, dass er die gewünschte Verdünnungswirkung zuverlässig erreichen kann. Ein simples Abführen des Kühlluftstroms aus der Prüfkammer ist somit nicht ausreichend. Vielmehr sollte der Abluftkanal eine Dimensionierung aufweisen, die die Verdünnungswirkung ermöglicht.

Erfindungsgemäß besteht der Abluftkanal aus einem nicht korrosiven, elektrisch leitenden Material. Gegebenenfalls ist der gesamte Abluftkanal zu beheizen, um eine Konglomerat-Bildung der Partikel zu verhindern.

Der Volumenstrom im Abluftkanal kann mit einer geeigneten Volumenstrom-Messeinrichtung gemessen werden.

Zusammen mit der Messung der Partikel (Anzahl, Größe) können folgende Messparameter von Interesse sein: Luftmenge, gefahrene Kilometer (des Fahrzeugs, dessen Bremssystem gerade auf dem Prüfstand montiert ist).

Weitere Parameter wie Bremsdruck, Bremsmoment, Geschwindigkeit und weitere Parameter werden durch den eigentlichen Prüfstand erfasst und mit der Partikelmessung synchronisiert.

Nach einer Messung soll die folgende Messwertangabe möglich sein: Partikelanzahl pro (auf dem Prüfstand simuliert) gefahrene Kilometer und Partikelgröße bzw. Größenverteilung in den jeweiligen Messabschnitten des getesteten Lastzyklus der Bremsenprüfung.

Auf diese Weise kann die Bremsstaub-Messvorrichtung vollständig in den Bremsenprüfstand integriert werden und im Rahmen eines dynamischen, realitätsnahen Lastzyklus automatisiert messen.

Die Erfindung betrifft demnach eine Vorrichtung nach Anspruch 1 zum Messen und Erfassen von Bremsstaub-Partikeln, die aus einer Bremse herausgelöst wurden, mit einer Entnahmeeinrichtung zum Aufnehmen von Bremsstaub-Partikeln, einer Partikel-Messeinrichtung zum Messen der Anzahl und/oder der Größe der Bremsstaub-Partikel, und mit einer Fördereinrichtung zum Führen und Fördern der Bremsstaub-Partikel von der Entnahmeeinrichtung zu der Partikel-Messeinrichtung. Die Entnahmeeinrichtung ist geeignet, die von der Bremse abgegebenen Partikel einzufangen und weiter zu transportieren.

Die Fördereinrichtung, z.B. ein Schlauch, in dem ein Luftstrom geführt wird, ist geeignet, die von der Entnahmeeinrichtung gesammelten bzw. eingefangenen Partikel zu der Partikel-Messeinrichtung zu transportieren. Sie kann sinnvoll ausgebildet sein und z.B. auch einen beheizbaren Schlauch aufweisen, um eine Verklumpung der Partikel zu verhindern.

Es kann eine Bremsenaufnahme zum Aufnehmen einer Bremse vorgesehen sein. Die Bremse wird in der Bremsenaufnahme für Prüfzwecke gehalten und befestigt und ist selbst nicht Teil der Messvorrichtung. Vielmehr ist die Bremse der Prüfling, der mithilfe der Vorrichtung untersucht werden soll.

Die Entnahmeeinrichtung kann derart ausgebildet sein, dass sie im Bereich einer in der Bremsenaufnahme aufbaubaren Bremse anordenbar ist, insbesondere im Bereich eines Bremssattels der Bremse. Die Bremse ist dabei - wie oben ausgeführt - nicht Gegenstand der Messvorrichtung. Bei der Bremse kann es sich z.B. um eine an sich vielfach bekannte Scheibenbremse für ein Fahrzeug handeln, mit einer Bremsschreibe und einem die Bremsscheibe teilweise umgreifenden Bremssattel und Bremsscheibe. Die Bremse ist in Bremsenaufnahme für die Prüfzwecke aufbaubar.

Die Entnahmeeinrichtung kann einen Sammelbehälter aufweisen, mit dem die Bremsstaub-Partikel aufgefangen werden können. Der Sammelbehälter kann aus einem nicht korrosiven, elektrisch leitenden Material bestehen. In der Nähe der Entnahmestelle bzw. des Sammelbehälters, an der die Entnahmeeinrichtung den Bremsstaub aufnimmt, können noch weitere Instrumente angeordnet sein, die z.B. der Bestimmung der Partikelmasse, der Partikelgrößen-Verteilung etc. dienen können.

Die Bremsenaufnahme ist von einer für Bremsstaub-Partikel undurchlässigen Einhausung umschlossen, wodurch ein Bremsenaufnahmeraum definiert wird. Die Bremse ist dann innerhalb des Bremsenaufnahmeraums in der Bremsenaufnahme befestigt und kann geprüft werden.

Die Einhausung umgibt den Bremsenaufnahmeraum und kann aus einem nicht korrosiven, elektrisch leitenden Material bestehen. Die Einhausung ist gegenüber der Umgebung abgedichtet, so dass ausschließlich Luft über einen nachfolgend beschriebenen Zuluftkanal einer Gebläseanlage zugeführt werden kann. Desweiteren ermöglicht es die Einhausung, dass die im Prüfbetrieb emittierten Bremsstaub-Partikel vollständig erfasst. Die Einhausung dient jedoch nicht zum Verdünnen oder Homogenisieren der Bremsemissionen, diese Vorgänge finden vielmehr wie zuvor geschildert im Abluftkanal statt.

Es ist demnach eine Gebläseanlage vorgesehen, mit einem Zuluftkanal und einem Abluftkanal, um einen Luftstrom über die Bremse zu führen. Insbesondere sind der Zuluftkanal und der Abluftkanal an die Einhausung angekoppelt und damit jeweils mit dem Bremsenaufnahmeraum verbunden, zum Führen eines Luftstroms durch den Bremsenaufnahmeraum. Erfindungsgemäß sind die Öffnungen von Zuluftkanal (Auslassöffnung des Zuluftkanals an der Einhausung) und Abluftkanal (Einlassöffnung des Abluftkanals an der Einhausung) zum Bremsenaufnahmeraum in der Einhausung gegenüberliegend angeordnet. Die Öffnungen können derart gestaltet sein, dass ihr jeweiliger Öffnungsquerschnitt es dem Luftstrom erlaubt, den gesamten Bremsenaufnahmeraum in der Einhausung zu durchströmen. Die Bremsaufnahme ist kann derart positioniert seine, dass eine auf ihr aufgebaute Bremse zwischen der Auslassöffnung des Zuluftkanals und der Einlassöffnung des Abluftkanals angeordnet ist.

Die Querschnitte des Zuluftkanals und des Abluftkanals sind dementsprechend groß zu definieren. Erfindungsgemäß ist der Abluftkanal derart dimensioniert, dass sein freier Durchmesser an seiner Einlassöffnung an der Einhausung nicht kleiner als 70% des Durchmessers der zu prüfenden Bremsscheibe ist. Damit kann erreicht werden, dass der Luftstrom die Bremse voll erfasst und sämtliche Bremsemissionen durch die Einlassöffnung des Abluftkanals abführt.

Der Luftstrom dient zum Führen der Bremsstaub-Partikel, so dass die Bremsstaub-Partikel zuverlässig durch die Entnahmeeinrichtung im Abluftkanal erfasst werden können, nachdem die Bremsstaub-Partikel einen bestimmten Strömungsweg im Abluftkanal mit einer bestimmten Länge durchströmt haben. Ebenso kann der Luftstrom auch zum Kühlen der Bremse genutzt werden.

Der Abstand zwischen der Einlassöffnung des Abluftkanals und der Entnahmeeinrichtung kann wenigstens dem 5-fachen, insbesondere wenigstens dem 10-fachen bzw. wenigstens dem 20-fachen des Durchmessers oder der größten Diagonalen des Querschnitts des Abluftkanals, insbesondere des Querschnitts des Abluftkanals stromab von der Einlassöffnung entsprechen. Eine eventuelle Trichterform der Einlassöffnung und damit Erweiterung des Querschnitts am Einlass bleibt bei dieser Berechnung unberücksichtigt; der Abstand bestimmt sich durch die Dimension des nachfolgend über einen bestimmten Abschnitt einen im Wesentlichen konstanten Querschnitt aufweisenden Abluftkanal. Wenn der Abluftkanal einen rechteckigen Querschnitt aufweist, kann als Parameter auch die größte Kantenlänge des Rechtecks herangezogen werden, für die dann die vorgenannten Bedingungen gelten. Damit ist gewährleistet, dass der Abluftkanal eine gewisse Länge aufweist, um die gewünschte Verdünnungswirkung zu erzielen. So kann die Länge des Abluftkanals von seiner Einlassöffnung bis zur Entnahmeeinrichtung z.B. wenigstens 100 cm oder wenigstens 200 cm betragen.

Der Abstand kann insbesondere auch verstanden werden als die Länge einer virtuellen Verbindungslinie der jeweiligen Flächenschwerpunkte der Querschnittsflächen im Abluftkanal von der Einlassöffnung bis zur Entnahmeeinrichtung.

Die Entnahmeeinrichtung kann demnach derart in dem Abluftkanal angeordnet sein, dass der Strömungsweg des Luftstroms von der Bremse bis zu der Entnahmeeinrichtung eine vorgegebene Länge aufweist. Erfindungsgemäß ist die Länge des Strömungswegs des Luftstroms und damit der Abstand zwischen der Drehachse der Bremse und der Entnahmeeinrichtung von der Größe des Querschnitts des Abluftkanals abhängig sein.

Die Erfindung betrifft demnach insbesondere eine Vorrichtung zum Messen und Erfassen von Bremsstaub-Partikeln, die aus einer Bremse herausgelöst wurden, mit einer Entnahmeeinrichtung zum Aufnehmen von Bremsstaub-Partikeln, einer Partikel-Messeinrichtung zum Messen der Anzahl und/oder der Größe der Bremsstaub-Partikel, und mit einer Fördereinrichtung zum Führen und Fördern der Bremsstaub-Partikel von der Entnahmeeinrichtung zu der Partikel-Messeinrichtung. Die Entnahmeeinrichtung ist zu diesem Zweck im Abluftkanal angeordnet, dessen Öffnung sich in der Einhausung des Bremsenaufnahmeraumes befindet. Die zu prüfende Bremse ist zum Zwecke der Bremsstaub-Partikel Messung von dieser Einhausung umgeben und kann an einer gegenüberliegenden Seite zum Abluftkanal mit einem Kühlluftstrom aus einem Zuluftkanal durch die Öffnung in der Einhausung versorgt werden.

Die Strömungsrichtung des Luftstroms kann in geeigneter Weise gewählt werden. So kann die Luftströmung von oben nach unten oder von unten nach oben oder auch in anderer Weise gerichtet sein.

Die Luftströmung kann durch im Zuluftkanal angeordnete Stromführungselemente vergleichmäßigt werden, um eine homogene Mischung von Bremsstaub-Partikeln mit (Verdünnungs-)Luft zu erreichen.

Die Gebläseanlage kann zusätzlich eine Luftkonditionierungsanlage aufweisen, z.B. mit Einlassfiltern zum Reinigen der über den Zuluftkanal zugeführten Luft und zum Konditionieren der Luft hinsichtlich Temperatur und Feuchtigkeit. Weiterhin können Strömungsgleichrichter vorgesehen sein. Zumindest bezüglich der Luftströmung im Abluftkanal kann die Strömungsgeschwindigkeit steuerbar sein. Durch das Konditionieren der Luft wird erreicht, dass die Prüfbedingungen für die Bremse weitgehend standardisiert und reproduziert werden können.

Durch die Kombination aus der Einhausung und der im Abluftkanal vorgesehenen Entnahmeeinrichtung ist eine vollständige Erfassung sämtlicher Partikel möglich, die sich aus der Bremse während des Mess- bzw. Prüfbetriebs gelöst haben.

Die Partikel-Messeinrichtung kann außer zum Messen der Bremsstaub-Partikel auch zur Abgasanalyse geeignet sein, insbesondere zum Messen von Partikeln in Dieselabgasen. Damit kann ein am Prüfstand z.B. für die Prüfung von Verbrennungsmotoren, insbesondere Dieselmotoren schon vorhandenes Gerät auch für die Messung von Bremsstaub genutzt werden.

Die Partikel-Messeinrichtung kann z.B. einen Messbereich von D₅₀ = 10 nm - 2.500 nm aufweisen.

Die Partikelmessung kann dabei in die Automatisierungssoftware für eine Bremsen-Lasteinrichtung (z.B. einem Dynamometer) integriert sein. Sie kann aber auch separat zu der Automatisierungssoftware vorgesehen sein bzw. zumindest ohne eine Integrierung in die Automatisierung des Dynamometers arbeiten. Eine Synchronisation der Partikelmessung mit dem Betrieb der Bremsen-Lasteinrichtung ist aber zweckmäßig.

Die Fördereinrichtung kann eine oder mehrere rohr- bzw. schlauchartige Leitungen aufweisen, die bedarfsweise auch beheizbar sein können.

Dabei kann eine Leitung die Entnahmeeinrichtung mit der Partikel-Messeinrichtung verbinden.

Weiterhin wird ein Bremsenprüfstand angegeben, mit einer Bremsenaufnahme zum Aufnehmen einer zu prüfenden Bremse, einer Antriebsvorrichtung zum Aufbringen einer Bremslast auf die Bremse, Messeinrichtungen zum Erfassen von Prüf- und Messparametern der Bremse, und mit einer Vorrichtung zum Bestimmen von Bremsstaub-Partikeln, wie oben angegeben.

Bei den Prüf- und Messparametern der Bremse kann es sich um die Parameter handeln, die üblicherweise für das Prüfen einer Bremse relevant sind. Dazu gehören die Antriebsleistung der Antriebsvorrichtung, die Bremsleistung, das Abstützmoment der Bremse, die Drehzahl, die Bremskraft, die Temperaturentwicklung, Schwingungen etc.

Die Bremsstaub-Partikel-Messvorrichtung kann integraler Bestandteil des Bremsenprüfstands sein, also zusammen mit dem Bremsenprüfstand verbaut sein. Auf diese Weise steht die Vorrichtung immer beim Prüfbetrieb zur Verfügung.

Die Messergebnisse der Partikel-Messeinrichtung und die Prüf- und Messparameter der Bremse können miteinander korreliert werden, d.h. miteinander in Zusammenhang gesetzt werden. Z.B. kann protokolliert werden, bei welchem Prüfbetrieb welche Partikelmenge produziert wird. So lässt sich beispielsweise eine Korrelation zwischen der Bremsleistung, der Drehzahl, der Temperatur und der Partikelmenge bzw. -größe herstellen und dokumentieren.

Für die Korrelierung der Messergebnisse und Parameter kann eine entsprechende Auswerteeinrichtung vorgesehen sein.

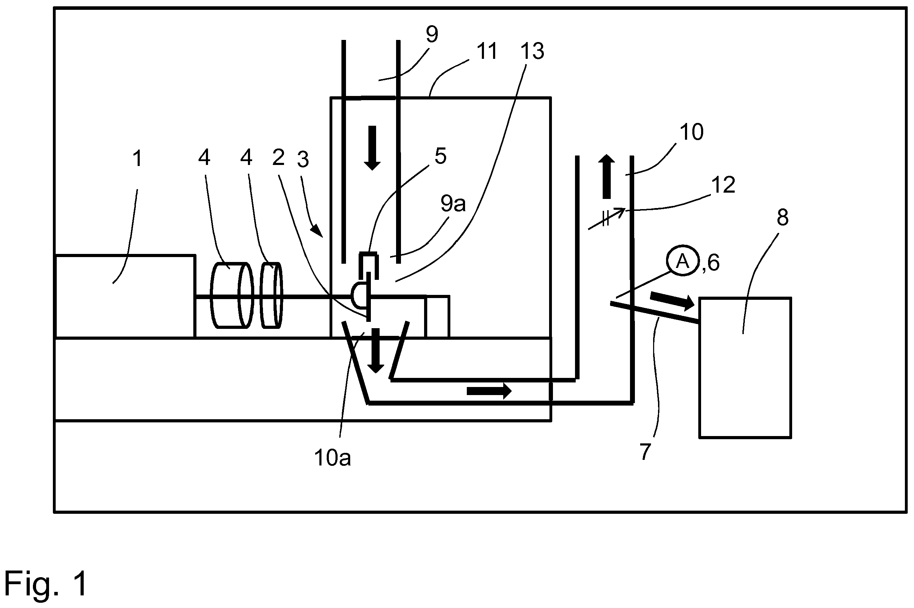

Diese und weitere Vorteile und Merkmale werden nachfolgend unter Zuhilfenahme der Figur anhand eines Beispiels näher erläutert. Die **einzige Figur** zeigt in schematischer Weise eine Ausführungsform für eine Vorrichtung zum Erfassen und Messen von Bremsenstaub-Partikeln, die als integraler Bestandteil eines Bremsenprüfstandes vorgesehen ist.

Der Bremsenprüfstand ist in dem gezeigten Beispiel als Schwungmassen-Bremsenprüfstand ausgebildet und in der Figur in schematischer Ansicht dargestellt.

Ein als Antriebsmaschine dienender Motor 1, z.B. ein Elektromotor, treibt eine in dem Bremsenprüfstand eingesetzte Bremsscheibe 2 drehend an, die Teil der zu prüfenden Bremse 3 ist. Zur Stabilisierung der Drehung können in bekannter Weise Schwungmassen 4 integriert sein.

Die Bremsscheibe 2 wird von einem ebenfalls zu der zu prüfenden Bremse 3 gehörenden Bremssattel 5 in bekannter Weise teilweise umschlossen. Der Bremssattel 5 trägt die in der Figur nicht dargestellten Bremsbeläge, die beim Betätigen der Bremse 3 einem Verschleiß unterliegen, wodurch die zu erfassenden (Fein-) Partikel aus den Bremsbelägen herausgelöst werden.

Die Bremse 3 ist in dem Bremsenprüfstand in eine nicht dargestellte Bremsenaufnahme eingebaut, die die Bremse und ihre Komponenten trägt und eine stabile Abstützung der Bremsmomente gewährleistet. Der Aufbau einer derartigen Bremsenaufnahme bei Bremsenprüfständen ist hinlänglich bekannt, so dass sich eine weitere Beschreibung erübrigt.

Bei dem in der Figur gezeigten Beispiel ist erfindungsgemäß eine Gebläseanlage vorgesehen, mit einem Zuluftkanal 9 mit einer Auslassöffnung 9a und einem Abluftkanal 10 mit einer Einlassöffnung 10a. Der Zuluftkanal 9 führt über seine Auslassöffnung 9a Luft in eine Einhausung 11, die die als Prüfling dienende Bremse 3 umschließt und für Bremsenstaub-Partikel undurchlässig ist. Der Abluftkanal 10 führt diese Luft über seine Einlassöffnung 10a wieder aus der Einhausung 11 ab. Die Einhausung 11 umschließt somit einen Bremsenaufnahmeraum 13.

Im Abluftkanal 10 ist eine Messstelle für eine Luftvolumenstrommessung vorgesehen sein, z.B. bei Bezugszeichen 12.

Die Gebläseanlage ist bei Bremsenprüfständen üblicherweise vorhanden, um eine gute Belüftung der Bremse, insbesondere zu Kühlzwecken zu gewährleisten.

Die über den Zuluftkanal 9 zugeführte Luft kann durch eine nicht dargestellte Luftkonditioniereinrichtung hinsichtlich der Temperatur, der Luftfeuchtigkeit und der Reinheit (z.B. mittels Filter) in der gewünschten Weise konditioniert werden, um auf diese Weise reproduzierbare Prüfergebnisse zu erreichen.

Der Bremsstaub bzw. die Bremsstaub-Partikel werden über den Abluftkanal 10 zur eigentlichen Messstelle (bei A) geführt, die sich im Abluftkanal 10 befindet und an der die Entnahmeeinrichtung 6 vorgesehen ist. Dort werden die Partikel aufgenommen und z.B. über einen beheizten Schlauch 7 zum Partikelmessgerät 8 geführt. Bei dem Partikelmessgerät 8 kann es sich um ein an sich bekanntes Gerät handeln, wie es z.B. bei der Abgasmessung verwendet wird. Durch das Partikelmessgerät 8 werden die Partikelanzahl und die Partikelgröße erfasst.

Die Entnahmeeinrichtung 6 kann wiederum in geeigneter Weise ausgebildet sein, um die Bremsstaub-Partikel aus dem durch den Abluftkanal 10 strömenden Luftstrom zu entnehmen.

Um in dem Abluftkanal 10 den gewünschten Verdünnungseffekt zu erreichen, mit dem u.a. die Bildung von Verklumpungen oder Konglomeraten der Bremspartikel zu vermeiden, sollten die Dimensionen des Abluftkanals 10 entsprechend gewählt werden. Dies betrifft insbesondere die Länge des Abluftkanals 10 zwischen der zu prüfenden Bremse 3 und der Messstelle B sowie die Querschnittsfläche des Abluftkanals 10. So beträgt erfindungsgemäß der Abstand zwischen der Drehachse der zu prüfenden Bremse 3 und der Messstelle (bei B) das 10 bis 20fache des Durchmessers des Abluftkanals 10. Sollte der Abluftkanal 10 rechteckig sein, so ist die Seitenlänge der längeren Kante zur Berechnung des Abstandes zwischen der Drehachse der zu prüfenden Bremse und der Messstelle B zu wählen. Der Querschnitt des Abluftkanals 10 ist wenigstens an seinem Einlass an der Einhausung 11 nicht kleiner als 70% des Durchmessers der Bremsscheibe der zu prüfenden Bremse 3.

## Patentansprüche

1. Vorrichtung zum Messen und Erfassen von Bremsstaub-Partikeln, mit
- einer Einhausung (11) zum Definieren eines Bremsenaufnahmeraums (13), in den eine zu prüfende Bremse (3) einbaubar ist;
- einer Gebläseanlage mit einem Zuluftkanal (9) und einem Abluftkanal (10), die jeweils mit dem Bremsenaufnahmeraum (13) verbunden sind, zum Führen eines Luftstroms durch den Bremsenaufnahmeraum (13);
- einer in dem Abluftkanal (10) angeordneten Entnahmeeinrichtung (6) zum Aufnehmen von Bremsstaub-Partikeln an einer Messstelle (A);
- einer Partikel-Messeinrichtung (8) zum Messen der Anzahl und/oder der Größe der Bremsstaub-Partikel; und mit
- einer Fördereinrichtung (7) zum Führen und Fördern der Bremsstaub-Partikel von der Entnahmeeinrichtung (6) zu der Partikel-Messeinrichtung (8); wobei
- der Zuluftkanal (9) eine Auslassöffnung (9a) aufweist, über die Luft in die Einhausung (11) führbar ist;
- die Einhausung (11) für Bremsstaub-Partikel undurchlässig ist;
- die an der Einhausung (11) vorgesehene Auslassöffnung (9a) des Zuluftkanals (9) und eine an der Einhausung (11) vorgesehene Einlassöffnung (10a) des Abluftkanals (10) zueinander gegenüberliegend angeordnet sind; **dadurch gekennzeichnet, dass**
- die Länge des Strömungswegs des Luftstroms und damit der Abstand zwischen der Drehachse der Bremse (3) und der Entnahmeeinrichtung (6) von der Größe des Querschnitts des Abluftkanals (10) abhängig ist;
- der Abluftkanal (10) aus einem nicht korrosiven, elektrisch leitenden Material besteht;
- der Abluftkanal (10) derart dimensioniert ist, dass sein freier Durchmesser an seiner Einlassöffnung (10a) an der Einhausung (11) nicht kleiner als 70% des Durchmessers der zu prüfenden Bremsscheibe ist; und wobei
- der Abstand zwischen der Drehachse der zu prüfenden Bremse (3) und der Messstelle (A) das 10- bis 20-fache des Durchmessers des Abluftkanals (10) beträgt.

2. Vorrichtung nach Anspruch 1, mit einer in dem Bremsenaufnahmeraum (13) angeordneten Bremsenaufnahme zum Aufnehmen einer Bremse (3).

3. Vorrichtung nach Anspruch 1 oder 2, wobei die Entnahmeeinrichtung (6) derart in dem Abluftkanal (10) angeordnet ist, dass ein Strömungsweg des Luftstroms von der Bremse (3) bis zu der Entnahmeeinrichtung (6) eine vorgegebene Länge aufweist.

4. Vorrichtung nach einem der vorstehenden Ansprüche, wobei der Abstand zwischen der Einlassöffnung (10a) des Abluftkanals (10) und der Entnahmeeinrichtung (6) wenigstens dem 5-fachen, insbesondere wenigstens dem 10-fachen, insbesondere wenigstens dem 20-fachen des Durchmessers oder der größten Diagonalen des Querschnitts des Abluftkanals (10) entspricht.

5. Vorrichtung nach einem der vorstehenden Ansprüche, wobei die Bremsenaufnahme durch ein die Einhausung (11) bildendes Messgehäuse umschlossen ist, wodurch der Bremsenaufnahmeraum (13) definiert wird.

6. Vorrichtung nach einem der vorstehenden Ansprüche, wobei
- die Entnahmeeinrichtung (6) eine Entnahmestelle (A) im Abluftkanal (10) der Gebläseanlage aufweist; und wobei
- die Entnahmestelle (A) über die Fördereinrichtung (7) mit der Partikel-Messeinrichtung (8) verbunden ist.

7. Vorrichtung nach einem der vorstehenden Ansprüche, wobei die Partikel-Messeinrichtung (8) außer zum Messen der Bremsstaub-Partikel auch zur Abgasanalyse geeignet ist, insbesondere zum Messen von Partikeln in Dieselabgasen.

8. Vorrichtung nach einem der vorstehenden Ansprüche, wobei die Fördereinrichtung eine rohr- bzw. schlauchartige Leitung (7) aufweist.

9. Vorrichtung nach Anspruch 8, wobei die Leitung (7) die Entnahmeeinrichtung (6) mit der Partikel-Messeinrichtung (8) verbindet.

10. Bremsenprüfstand, mit
- einer Bremsenaufnahme zum Aufnehmen einer zu prüfenden Bremse (3);
- einer Antriebsvorrichtung (1) zum Aufbringen einer Bremslast auf die Bremse (3);
- Messeinrichtungen zum Erfassen von Prüf- und Messparametern der Bremse; und mit
- einer Vorrichtung zum Messen und Erfassen von Bremsstaub-Partikeln nach einem der vorstehenden Ansprüche.

11. Bremsenprüfstand nach Anspruch 10, wobei die Vorrichtung zum Messen und Erfassen von Bremsstaub-Partikeln integraler Bestandteil des Bremsenprüfstands ist.

12. Bremsenprüfstand nach Anspruch 10 oder 11, wobei die Messergebnisse der Partikel-Messeinrichtung (8) und die Prüf- und Messparameter der Bremse miteinander korrelierbar sind.

## Claims

1. A device for measuring and detecting brake dust particles, comprising
- a housing (11) for defining a brake mount space (13) in which a brake (3) to be tested can be installed;
- a fan system with a supply air duct (9) and an exhaust air duct (10), which are each connected to the brake mount space (13), for guiding an airflow through the brake mount space (13);
- an extraction unit (6) arranged within the exhaust air duct (10) for picking up brake dust particles at a measuring point (A);
- a particle measuring unit (8) for measuring the number and/or the size of the brake dust particles; and comprising
- a conveying unit (7) for guiding and conveying the brake dust particles from the extraction unit (6) to the particle measuring unit (8);
wherein
- the supply air duct (9) has an outlet (9a) through which air can be supplied to the housing (11);
- the housing (11) is impermeable to brake dust particles;
- the outlet (9a) of the supply air duct (9) provided on the housing (11) and an inlet (10a) of the exhaust air duct (10) provided on the housing (11) are arranged opposite to each other;
**characterized in that**
- the length of the flow path of the airflow and thus the distance between the rotation axis of the brake (3) and the extraction unit (6) depends on the size of the cross section of the exhaust air duct (10);
- the exhaust air duct (10) consists of a non-corrosive, electrically conductive material;
- the exhaust air duct (10) is dimensioned in such a manner that its free diameter at its inlet (10a) on the housing (11) is not smaller than 70% of the diameter of the brake disc to be tested; and wherein
- the distance between the rotation axis of the brake (3) to be tested and the measuring point (A) amounts to 10 to 20 times the diameter of the exhaust air duct (10).

2. The device according to claim 1, comprising a brake mount arranged within the brake mount space (13) for mounting a brake (3).

3. The device according to claim 1 or 2, wherein the extraction unit (6) is arranged within the exhaust air duct (10) in such a manner that a flow path of the airflow has a predefined length from the brake (3) to the extraction unit (6).

4. The device according to any one of the preceding claims, wherein the distance between the inlet (10a) of the exhaust air duct (10) and the extraction unit (6) corresponds to at least 5 times, in particular, at least 10 times, in particular, at least 20 times the diameter or the greatest diagonal of the cross section of the exhaust air duct (10).

5. The device according to any one of the preceding claims, wherein the brake mount is encased by a measuring housing forming the housing (11), whereby the brake mount space (13) is defined.

6. The device according to any one of the preceding claims, wherein
- the extraction unit (6) has an extraction point (A) within the exhaust air duct (10) of the fan system; and wherein
- the extraction point (A) is connected to the particle measuring unit (8) via the conveying unit (7).

7. The device according to any one of the preceding claims, wherein the particle measuring unit (8) is, other than for measuring the brake dust particles, also suited for exhaust gas analysis, in particular, for measuring particles in diesel exhaust gases.

8. The device according to any one of the preceding claims, wherein the conveying unit has a pipe or hose-shaped conduit (7).

9. The device according to claim 8, wherein the conduit (7) connects the extraction unit (6) to the particle measuring unit (8).

10. A brake test stand, comprising
- a brake mount for mounting a brake (3) to be tested;
- a driving device (1) for applying a brake load to the brake (3);
- measuring units for recording test and measuring parameters of the brake; and comprising
- a device for measuring and detecting brake dust particles according to any one of the preceding claims.

11. The brake test stand according to claim 10, wherein the device for measuring and detecting brake dust particles is an integral component of the brake test stand.

12. The brake test stand according to claim 10 or 11, wherein the measuring results of the particle measuring unit (8) and the test and measuring parameters of the brake can be correlated with each other.

## Revendications

1. Dispositif pour mesurer et capter des particules de poussière de frein, comprenant
- une enceinte (11) pour définir un espace de réception de frein (13) dans lequel un frein (3) à contrôler peut être monté ;
- une soufflerie comprenant un conduit d'air entrant (9) et un conduit d'air d'échappement (10) qui sont reliés chacun à l'espace de réception de frein (13) pour mener un flux d'air à travers l'espace de réception de frein (13) ;
- un équipement de prélèvement (6) disposé dans le conduit d'air d'échappement (10) pour recevoir des particules de poussière de frein en un point de mesure (A) ;
- un équipement de mesure de particules (8) pour mesurer le nombre et/ou la taille des particules de poussière de frein ; et comprenant
- un équipement de convoyage (7) pour mener et convoyer les particules de poussière de frein de l'équipement de prélèvement (6) à l'équipement de mesure de particules (8) ; dans lequel
- le conduit d'air entrant (9) présente une ouverture de sortie (9a) par laquelle de l'air peut être amené dans l'enceinte (11) ;
- l'enceinte (11) est imperméable aux particules de poussière de frein ;
- l'ouverture de sortie (9a) du conduit d'air entrant (9) prévue sur l'enceinte (11) et une ouverture d'admission (10a) du conduit d'air d'échappement (10) prévue sur l'enceinte (11) sont disposées l'une en face de l'autre ; **caractérisé en ce que**
- la longueur du chemin d'écoulement du flux d'air et ainsi la distance entre l'axe de rotation du frein (3) et l'équipement de prélèvement (6) dépendent de la taille de la section transversale du conduit d'air d'échappement (10) ;
- le conduit d'air d'échappement (10) est constitué d'un matériau non corrosif et électriquement conducteur ;
- le conduit d'air d'échappement (10) est dimensionné de telle manière que son diamètre libre en son ouverture d'admission (10a) sur l'enceinte (11) ne soit pas inférieur à 70 % du diamètre du disque de frein à contrôler ; et dans lequel
- la distance entre l'axe de rotation du frein (3) à contrôler et le point de mesure (A) est égale à 10 à 20 fois le diamètre du conduit d'air d'échappement (10).

2. Dispositif selon la revendication 1, comprenant un logement de frein disposé dans l'espace de réception de frein (13) pour recevoir un frein (3).

3. Dispositif selon la revendication 1 ou 2, dans lequel l'équipement de prélèvement (6) est disposé dans le conduit d'air d'échappement (10) de telle manière qu'un chemin d'écoulement du flux d'air du frein (3) jusqu'à l'équipement de prélèvement (6) présente une longueur prédéfinie.

4. Dispositif selon l'une des revendications précédentes, dans lequel la distance entre l'ouverture d'admission (10a) du conduit d'air d'échappement (10) et l'équipement de prélèvement (6) correspond à 5 fois au moins le diamètre ou les plus grandes diagonales de la section transversale du conduit d'air d'échappement (10), en particulier à 10 fois au moins, en particulier à 20 fois au moins.

5. Dispositif selon l'une des revendications précédentes, dans lequel le logement de frein est enfermé par un boîtier de mesure formant l'enceinte (11), ce qui permet de définir ainsi l'espace de réception de frein (13).

6. Dispositif selon l'une des revendications précédentes, dans lequel
- l'équipement de prélèvement (6) présente un point de prélèvement (A) dans le conduit d'air d'échappement (10) de la soufflerie ; et dans lequel
- le point de prélèvement (A) est relié à l'équipement de mesure de particules (8) par l'intermédiaire de l'équipement de convoyage (7).

7. Dispositif selon l'une des revendications précédentes, dans lequel, outre la mesure des particules de poussière de frein, l'équipement de mesure de particules (8) est également adapté à l'analyse des gaz d'échappement, en particulier à la mesure de particules dans des gaz d'échappement diesel.

8. Dispositif selon l'une des revendications précédentes, dans lequel l'équipement de convoyage présente une conduite tubulaire ou flexible (7).

9. Dispositif selon la revendication 8, dans lequel la conduite (7) relie l'équipement de prélèvement (6) à l'équipement de mesure de particules (8).

10. Banc d'essai de freins, comprenant
- un logement de frein pour recevoir un frein (3) à contrôler ;
- un dispositif d'entraînement (1) pour appliquer une charge de freinage sur le frein (3) ;
- des équipements de mesure pour acquérir des paramètres de contrôle et de mesure du frein ; et comprenant
- un dispositif pour mesurer et capter des particules de poussière de frein selon l'une des revendications précédentes.

11. Banc d'essai de freins selon la revendication 10, dans lequel le dispositif pour mesurer et capter des particules de poussière de frein fait partie intégrante du banc d'essai de freins.

12. Banc d'essai de freins selon la revendication 10 ou 11, dans lequel les résultats de mesure de l'équipement de mesure de particules (8) et les paramètres de contrôle et de mesure du frein peuvent être corrélés les uns avec les autres.
